# EUROPÄISCHE PATENTSCHRIFT

(11) **EP 3 458 320 B1**
(45) Veröffentlichungstag und Bekanntmachung des Hinweises auf die Patenterteilung: **11.03.2020**
(21) Anmeldenummer: 17713252.9
(22) Anmeldetag: 23.03.2017
(51) Int. Cl.: B60T 13/74

(54) **VERFAHREN ZUM ÜBERPRÜFEN DER BREMSKRAFT IN EINEM FAHRZEUG**
METHOD FOR CHECKING THE BRAKING FORCE IN A VEHICLE
PROCÉDÉ POUR VÉRIFIER LA FORCE DE FREINAGE DANS UN VÉHICULE

(30) Priorität: 17.05.2016 DE 102016208396
(43) Veröffentlichungstag der Anmeldung: 27.03.2019
(73) Patentinhaber: Robert Bosch GmbH, 70442 Stuttgart (DE)
(72) Erfinder: BAEHRLE-MILLER, Frank, 71101 Schoenaich (DE); MANNHERZ, Edith, 74189 Weinsberg (DE)
(86) Internationale Anmeldenummer: PCT/EP2017/056942
(87) Internationale Veröffentlichungsnummer: WO 2017/198372

(56) Entgegenhaltungen:
- DE-A1- 10 349 970
- DE-A1-102012 213 289
- DE-A1-102014 222 197

## Beschreibung

Die Erfindung bezieht sich auf ein Verfahren zum Überprüfen der Bremskraft, insbesondere der Parkbremskraft in einem Fahrzeug mit hydraulischer Fahrzeugbremse und elektromechanischer Bremsvorrichtung.

### Stand der Technik

Eine Feststellbremsanlage mit einem elektrischen Bremsmotor zur Erzeugung einer das Fahrzeug im Stillstand festsetzenden Parkbremskraft wird in der DE 10 2004 004 992 A1 beschrieben. Der elektrische Bremsmotor der Feststellbremsanlage ist in die hydraulische Radbremse integriert. Zum Erzeugen der Parkbremskraft verstellt der Bremsmotor einen Bremskolben in Richtung einer Bremsscheibe. Bei einem regulären Bremsvorgang wird dagegen der Bremskolben von der hydraulischen Fahrzeugbremse betätigt.

DE 10 2014 222197 A1 offenbart ein Verfahren zum Überprüfen der Bremskraft mit hydraulischer Fahrzeugbremse und elektromechanischer Bremsvorrichtung.

Beim Parken des Fahrzeugs wird über die Feststellbremsanlage mithilfe des elektrischen Bremsmotors die gewünschte, elektromechanische Parkbremskraft erzeugt. Falls diese ein gefordertes Bremskraftniveau nicht erreicht, wird zusätzlich die hydraulische Fahrzeugbremse betätigt.

### Offenbarung der Erfindung

Mit dem erfindungsgemäßen Verfahren kann eine aktuell wirksame Bremskraft in einem Fahrzeug überprüft werden, die sowohl über eine hydraulische Fahrzeugbremse als auch eine elektromechanische Bremsvorrichtung mit elektrischem Bremsmotor bereitgestellt wird. Bei der hydraulischen Fahrzeugbremse handelt es sich um eine reguläre Betriebsbremse, die im Fahrbetrieb zum Abbremsen des Fahrzeuges eingesetzt wird. Die elektromechanische Bremsvorrichtung mit elektrischem Bremsmotor wird bevorzugt zum Erzeugen einer Parkbremskraft eingesetzt, um eine das Fahrzeug im Stillstand festsetzende Bremskraft zu erzeugen; es ist aber möglich, mithilfe der elektromechanischen Bremsvorrichtung das Fahrzeug beim Fahren abzubremsen.

Sowohl die hydraulische Fahrzeugbremse als auch die elektromechanische Bremsvorrichtung wirken auf den gleichen Bremskolben einer Radbremseinrichtung, die Teil der hydraulischen Fahrzeugbremse ist. Die beiden Bremssysteme können alternativ oder kumulativ eingesetzt werden, wobei im letztgenannten Fall die erzeugte Gesamtbremskraft sich kumulativ durch Überlagerung des von der hydraulischen Fahrzeugbremse erzeugten hydraulischen Bremskraft und der elektromechanisch erzeugten Bremskraft ergibt.

Gemäß einer bevorzugten Ausführung sind die Radbremseinrichtungen an der Hinterachse des Fahrzeugs jeweils sowohl hydraulisch als auch elektromechanisch betätigbar, so dass in diese Radbremseinrichtungen auch jeweils ein elektrischer Bremsmotor integriert ist. Die Radbremseinrichtungen an der Vorderachse des Fahrzeug sind dagegen vorteilhafterweise ohne elektrischen Bremsmotor einer elektromechanischen Bremsvorrichtung ausgestattet und liegen nur in einem Bremskreis der hydraulischen Fahrzeugbremse.

Die hydraulische Fahrzeugbremse ist mit einem Bremskraftverstärker ausgestattet, um die vom Fahrer erzeugte Bremspedalkraft in einen erhöhten Bremsdruck des Bremsfluids umzusetzen. Der Bremskraftverstärker ist von einem vorzugsweise elektrisch steuerbaren Aktuator gebildet, beispielsweise einem iBooster.

Das erfindungsgemäße Verfahren bezieht sich auf Bremssituationen, in denen sowohl die elektromechanische Bremsvorrichtung mit dem elektrischen Bremsmotor als auch die hydraulische Fahrzeugbremse mit dem Bremskraftverstärker aktiv sind, um eine gewünschte Bremskraft zu erzeugen.

Mithilfe des erfindungsgemäßen Verfahrens kann festgestellt werden, ob die hydraulische Fahrzeugbremse und die elektromechanische Bremsvorrichtung ordnungsgemäß funktionieren. Ist dies nicht der Fall, wird ein Fehlersignal erzeugt, das dem Fahrer zur Anzeige gebracht oder in sonstiger Weise verarbeitet werden kann.

Bei dem Verfahren wird zunächst schrittweise Bremskraft aufgebaut, wobei in einem ersten Schritt zunächst der Bremskraftverstärker der hydraulischen Fahrzeugbremse einen definierten hydraulischen Soll-Bremsdruck erzeugt und anschließend, in einem weiteren Schritt, der elektrische Bremsmotor durch Zuspannen eine elektromechanische Bremskraft generiert. Durch die Zuspannbewegung des elektrischen Bremsmotors wird der Bremskolben in Richtung auf die Bremsscheibe verstellt, wobei die Verstellbewegung des Bremskolbens eine Volumenvergrößerung im hydraulischen Bremskreis zur Folge hat, die zu einem Druckabfall im Bremsfluid führt. Der Druckabfall kann ermittelt werden, wobei ein Fehlersignal für den Fall vorliegt, dass der Druckabfall außerhalb eines zulässigen Wertebereichs liegt.

Der sich aufgrund der Bremskolbenverschiebung einstellende Druckverlust im hydraulischen Bremskreis folgt einer Druck-Volumen-Kennlinie, die für die jeweils verwendete Hardware der hydraulischen Fahrzeugbremse bekannt ist. Die Verschiebung des Bremskolbens durch die Betätigung des elektrischen Bremsmotors der elektromechanischen Bremsvorrichtung ist ebenfalls bekannt, sie kann beispielsweise aus dem Verlauf der Stromaufnahme des Bremsmotors ermittelt werden, aus dem auch der Leerweg bis zum Anliegen des Bremskolbens an der Bremsscheibe bekannt ist. Aus der Bremskolbenverschiebung sowie den geometrischen Größen des Bremskolbens ergibt sich das zusätzliche Volumen für das Hydraulikfluid und aus der Druck-Volumen-Kennlinie des Bremsfluids der damit einhergehende Druckabfall als Sollwert. Liegt der tatsächliche, gemessene Druckabfall außerhalb des Sollwerts, muss von einem Fehler der hydraulischen Fahrzeugbremse und/oder in der elektromechanischen Bremsvorrichtung ausgegangen werden.

Es ist beispielsweise möglich, aus der Höhe des Druckabfalls auf den Fehlertyp zu schließen. Für den Fall, dass der Druckabfall kleiner ist als ein vorgegebener Schwellenwert, kann zum Beispiel auf eine unzureichende elektromechanische Bremskraft, gegebenenfalls auf eine abgequetschte Bremsleitung geschlossen werden. Ist dagegen der Druckabfall größer als der Schwellenwert, liegt ein Fehler in der hydraulischen Fahrzeugbremse vor. Hiermit ist ein Differenzierungskriterium zur Unterscheidung zwischen einem Fehler in der hydraulischen Fahrzeugbremse und einem Fehler in der elektromechanischen Bremsvorrichtung gegeben, wobei gegebenenfalls zur genaueren Differenzierung auf weitere Unterscheidungskriterien zurückgegriffen wird.

Der Druckabfall kann sowohl im Hinblick auf den absoluten Druckunterschied als auch im Hinblick auf den Verlauf des Druckabfalls ausgewertet werden, um Informationen über die Fehlerart zu erhalten. Bei korrekter Funktionsweise sowohl der hydraulischen Fahrzeugbremse als auch der elektromechanischen Bremsvorrichtung bleibt vorteilhafterweise der hydraulische Bremsdruck nach dem Einstellen eines definierten Zielwerts konstant, der Bremskraftverstärker wird nach dem Erreichen des Zielwerts nicht weiter betätigt. Während zugleich der elektrische Bremsmotor den Leerweg überwindet, bleibt der hydraulische Bremsdruck bei ordnungsgemäßer Funktion konstant. Ist dagegen eine Bremsleitung in der hydraulischen Fahrzeugbremse mit einer Quetschung versehen, die ein Drosselverhalten in der Bremsleitung zur Folge hat, sinkt der hydraulische Bremsdruck bereits vor dem Aufbau elektromechanischer Bremskraft ab und verharrt auf einem niedrigeren Niveau. Dies kann detektiert werden und zu einem entsprechenden Fehlersignal führen.

Bei ordnungsgemäßer Funktion sinkt der hydraulische Bremsdruck mit dem Aufbau elektromechanischer Bremskraft gemäß einer Sollkurve ab. Bleibt der tatsächliche Druckabfall gegenüber der Sollkurve zurück, deutet dies auf eine abgequetschte Bremsleitung hin, durch die kein Bremsfluid mehr transportiert wird.

Im Fall einer Leckage im hydraulischen Bremskreis sinkt der Druck im Bremsfluid nach dem Einstellen des Zieldrucks und ohne weitere Betätigung des Bremskraftverstärkers kontinuierlich ab, was ebenfalls detektiert werden kann und zu einem entsprechenden Fehlersignal führt.

Bei einem Fehler in der elektromechanischen Bremsvorrichtung kann der geforderte Bremskraftaufbau über den elektrischen Bremsmotor nicht durchgeführt werden, die Zielbremskraft der elektromechanischen Bremsvorrichtung kann nicht erreicht werden. Dementsprechend ist der Druckabfall im Bremsfluid geringer als erwartet, was ebenfalls detektiert werden kann und zu einem Fehlersignal führt.

Gemäß einer vorteilhaften Ausführung erfolgt nach dem Erreichen des definierten hydraulischen Bremsdrucks mithilfe des Bremskraftverstärkers keine Druck-Nachregelung, so dass auch bei ordnungsgemäßer Funktion sowohl der hydraulischen Fahrzeugbremse als auch der elektromechanischen Bremsvorrichtung ein Soll-Druckabfall zu erwarten ist, sobald der Bremskolben vom elektrischen Bremsmotor verschoben wird.

Gemäß einer weiteren zweckmäßigen Ausführung wird bereits während des Druckaufbaus des hydraulischen Bremsdrucks der elektrische Bremsmotor betätigt, um den Leerweg bis zum Erreichen eines Bremskontaktpunktes zurückzulegen, an dem der vom Bremsmotor verstellte Bremskolben ohne Lüftspiel an der Bremsscheibe anliegt. Hierdurch ist gewährleistet, dass der gesamte Bremsvorgang mit dem Aufbau hydraulischer und elektromechanischer Bremskraft in kurzer Zeit durchgeführt wird.

Gemäß einer weiteren zweckmäßigen Ausführung ist der hydraulische Soll-Bremsdruck, der durch die Betätigung des Bremskraftverstärkers erzeugt wird, höher als der Bremsdruck, welcher zum Erreichen der Zielbremskraft erforderlich ist. Hiermit wird der Tatsache Rechnung getragen, dass mit dem Verschieben des Bremskolbens durch den elektrischen Bremsmotor ein Druckabfall im Bremsfluid erfolgt. Vor dem Aufbau der elektromechanischen Bremskraft bleibt, bei ordnungsgemäßer Funktion der hydraulischen Fahrzeugbremse, der hydraulische Bremsdruck konstant.

Der Bremskraftverstärker bildet einen Aktuator, der elektrisch betätigbar ist. Es handelt sich beispielsweise um einen Elektromotor, der über ein Getriebe einen Hauptbremszylinder in der hydraulischen Fahrzeugbremse betätigt (iBooster). In Betracht kommen aber auch elektrisch ansteuerbare Hydraulikpumpen, zum Beispiel die Hydraulikpumpe eines elektrischen Stabilitätsprogrammes (ESP), das gegebenenfalls zusätzlich in die hydraulische Fahrzeugbremse integriert ist.

Die Verfahrensschritte laufen in einem Regel- bzw. Steuergerät ab, in welchem Stellsignale zur Ansteuerung der verschiedenen Komponenten des Bremssystems mit der hydraulischen Fahrzeugbremse einschließlich Bremskraftverstärker und der elektromechanischen Bremsvorrichtung mit dem elektrischen Bremsmotor erzeugt werden. Das Bremssystem umfasst sowohl die hydraulische Fahrzeugbremse als auch die elektromechanische Bremsvorrichtung.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer mit einer hydraulischen Fahrzeugbremse mit einem einen Aktuator bildenden Bremskraftverstärker, wobei die Radbremseinrichtungen der Fahrzeugbremse an der Fahrzeughinterachse zusätzlich als elektromechanische Bremsvorrichtung mit einem elektrischen Bremsmotor ausgeführt sind,
- Fig. 2: einen Schnitt durch eine elektromechanische Bremsvorrichtung mit einem elektrischen Bremsmotor,
- Fig. 3: ein Schaubild mit dem Verlauf des Bremsdrucks (durchgezogen), des Motorstroms des Bremsmotors (strichliert) und der Gesamtbremskraft (strichpunktiert), jeweils dargestellt für einen ordnungsgemäßen Bremsvorgang,
- Fig. 4: ein Fig. 3 entsprechendes Schaubild, dargestellt für einen Bremsvorgang mit blockierter hydraulischer Bremsleitung,
- Fig. 5: ein weiteres Schaubild, dargestellt für einen Bremsvorgang mit einer hydraulischer Bremsleitung mit reduziertem Querschnitt,
- Fig. 6: ein weiteres Schaubild, dargestellt für einen Bremsvorgang mit einer Leckage in der hydraulischen Fahrzeugbremse,
- Fig. 7: ein weiteres Schaubild, dargestellt für einen Bremsvorgang mit einem Defekt in der elektromechanischem Bremsvorrichtung.

In den Figuren sind gleiche Bauteile mit gleichen Bezugszeichen versehen.

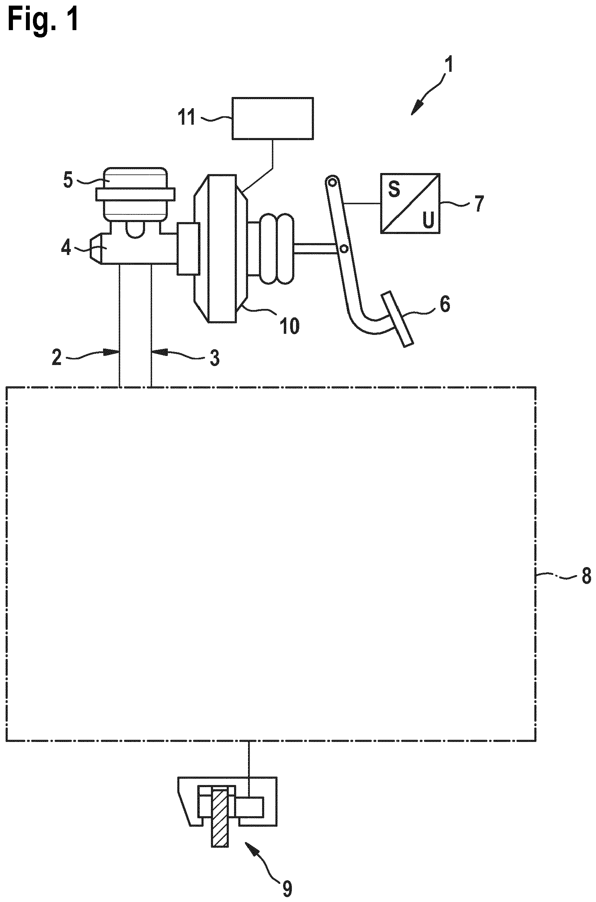

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher bevorzugt über ein Getriebe den Hauptbremszylinder 4 betätigt (iBooster). Der Bremskraftverstärker 10 bildet einen elektrisch steuerbaren Aktuator zur Beeinflussung des Bremsdrucks.

Die vom Pedalwegsensor 7 gemessene Stellbewegung des Bremspedals 6 wird als Sensorsignal an ein Regel- bzw. Steuergerät 11 übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist.

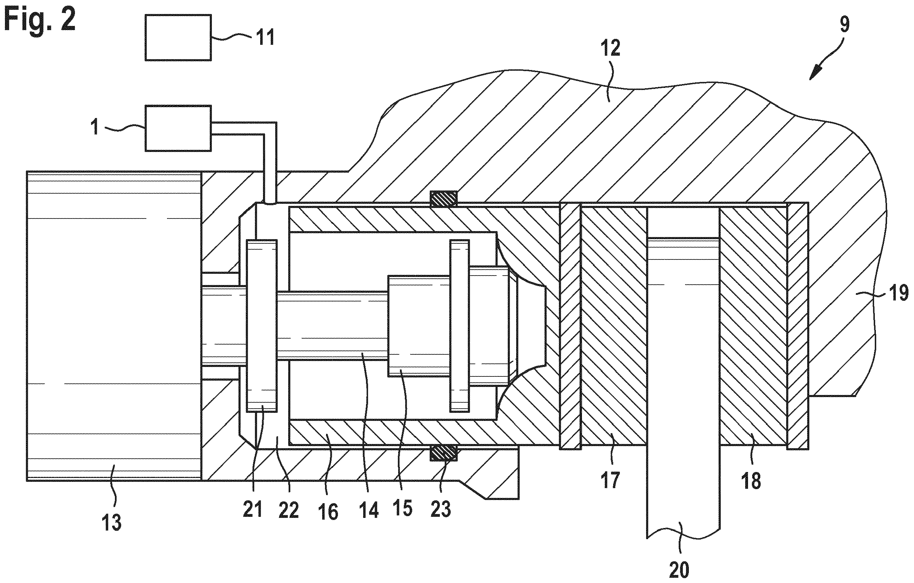

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung einen Gleichstrom-Elektromotor als Bremsmotor 13 auf, dessen Rotorwelle eine Spindel 14 rotierend antreibt, auf der eine Spindelmutter 15 drehbar gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 strömungsdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Anschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Regel- bzw. Steuergerät 11 erzeugt.

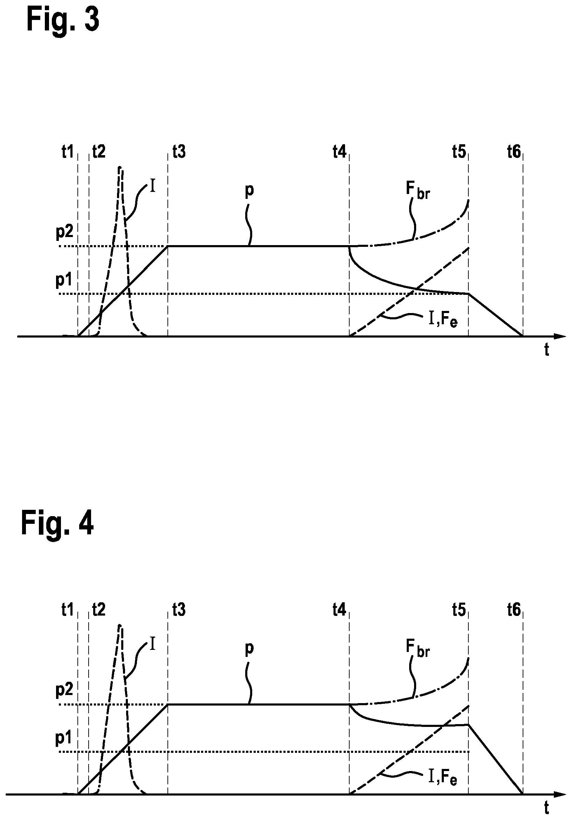

In den Fig. 3 bis 7 ist jeweils ein Schaubild mit dem Verlauf des mit durchgezogenem Strich dargestellten hydraulischen Bremsdrucks p, des mit strichlierter Linie dargestellten Motorstroms I des Bremsmotors und der mit strichpunktierter Linie dargestellten Gesamtbremskraft F_{br} gezeigt. Zwischen zwei Zeitpunkten t4 und t5 verläuft die elektromotorische Bremskraft Fₑ deckungsgleich mit dem Motorstrom I.

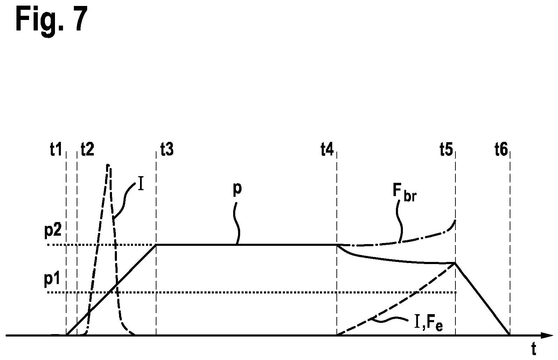

Fig. 3 zeigt das Schaubild für einen ordnungsgemäßen Bremsvorgang mit funktionierender hydraulischer Fahrzeugbremse und funktionierender elektromechanischer Bremsvorrichtung. In den Fig. 4 bis 6 ist dagegen die hydraulische Fahrzeugbremse defekt, in Fig. 7 ist die elektromechanische Bremsvorrichtung defekt.

Anhand des ordnungsgemäß funktionierenden Verlaufs in Fig. 3 wird die Funktionsweise für einen Bremsvorgang im Stillstand des Fahrzeugs zur Erzeugung einer das Fahrzeug festsetzenden Klemmkraft erläutert. Zunächst wird in einem ersten Schritt der Bremskraftverstärker in der hydraulischen Fahrzeugbremse angesteuert und ein definierter hydraulischer Bremsdruck p2 in der hydraulischen Fahrzeugbremse eingestellt. Der Beginn des Anstiegs des hydraulischen Bremsdrucks p erfolgt zum Zeitpunkt t1. Zum Zeitpunkt t3 ist der Zielbremsdruck erreicht, der im weiteren Verlauf bis zum Zeitpunkt t4 beibehalten wird; in der Zeitspanne zwischen t3 und t4 wird der Bremskraftverstärker nicht weiter betätigt, so dass der Bremsdruck p konstant bleibt. Der Anstieg erfolgt zwischen den Zeitpunkten t2 und t3 linear, wobei gegebenenfalls auch ein hiervon abweichender Verlauf, beispielsweise ein S-förmiger Verlauf des Anstiegs erfolgen kann.

Zum Zeitpunkt t2, der kurz auf den Startzeitpunkt t1 folgt, wird der elektrische Bremsmotor der elektromechanischen Bremsvorrichtung betätigt und in Richtung des Aufbaus einer Bremskraft zugespannt. Die Ansteuerung des elektrischen Bremsmotors ist gekennzeichnet durch einen kurzzeitigen Spitzenwert im Motorstrom I, der im weiteren Verlauf im Zeitraum zwischen dem Zeitpunkt t3 und t4 auf einen kleinen Wert geringfügig über der Nulllinie abfällt, der durch den Leerlauf der elektromechanischen Bremsvorrichtung gekennzeichnet ist. Zum Zeitpunkt t4 ist das Lüftspiel zwischen dem Bremsbelag am Bremskolben, der von dem elektrischen Bremsmotor verstellt wird, und der Bremsscheibe überwunden, woraufhin in der Zeitspanne zwischen t4 und t5 eine elektromechanische Bremskraft Fₑ aufgebaut wird, die parallel bzw. deckungsgleich zum Motorstrom I verläuft.

Mit dem Aufbau elektromechanischer Bremskraft Fₑ wird der Kolben vom Bremsmotor verschoben, wodurch sich das für das Bremsfluid zur Verfügung stehende Volumen vergrößert und der Bremsdruck p vom Zielbremsdruck p2 auf einen reduzierten Bremsdruck p1 abfällt, der etwa bei der Hälfte des Zielbremsdrucks p2 liegt. Die Gesamtbremskraft F_{br}, die sich aus dem elektromechanischen Anteil Fₑ und dem hydraulischen Bremskraftanteil zusammensetzt, steigt progressiv bis zum Zeitpunkt t5 an, an dem die linear ansteigende elektromechanische Bremskraft Fₑ ihr Maximum erreicht hat und der hydraulische Bremsdruck p rampenförmig bis auf null abfällt.

Fig. 4 zeigt einen Fehlerfall im Bremssystem, bei dem eine hydraulische Bremsleitung der hydraulischen Fahrzeugbremse beispielsweise durch Abquetschen blockiert ist, so dass durch diese Bremsleitung kein Bremsfluid strömen kann. Bei Betätigung des Bremskraftverstärkers wird zwar der Zieldruck p2 erreicht, jedoch ist der Druckabfall zwischen den Zeitpunkten t4 und t5 kleiner als der Soll-Druckabfall gemäß Fig. 3. Der Druckabfall entspricht etwa der Hälfte des Soll-Druckabfalls, was über Drucksensoren sensiert werden kann, woraufhin ein entsprechendes Fehlersignal erzeugt werden kann. Aus der Höhe des tatsächlichen Druckabfalls kann auf die Fehlerart geschlossen werden, nämlich eine abgequetschte Bremsleitung in der hydraulischen Fahrzeugbremse.

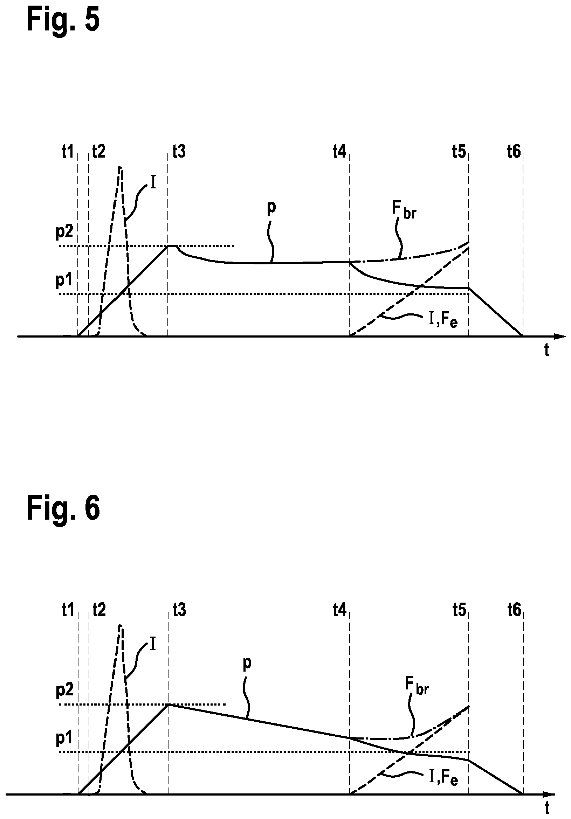

Fig. 5 steht für den Fehlerfall einer hydraulischen Bremsleitung mit reduziertem Querschnitt, was beispielsweise durch Anquetschen der Bremsleitung passieren kann. Der reduzierte Querschnitt der Bremsleitung führt zu einem Drosselverhalten, was sich zwischen den Zeitpunkten t3 und t4 in einem Druckabfall gegenüber dem Solldruck p2 äußert. Nach dem Erreichen des Solldrucks p2 zum Zeitpunkt t3 fällt der hydraulische Bremsdruck auf ein niedrigeres Bremsdruckniveau ab, das bis zum Zeitpunkt t4 beibehalten wird, an dem elektromechanische Bremskraft erzeugt wird.

Der Druckabfall in der Zeitspanne zwischen t4 und t5 ist größer als bei einer blockierten Bremsdruckleitung (Fig. 4), jedoch kleiner als der Soll-Druckabfall (Fig. 3). Aus der Höhe des Druckabfalls im Zeitpunkt t5 kann ebenfalls auf die Fehlerart geschlossen werden.

Fig. 6 zeigt das Schaubild mit einem vorzeitigen Druckabfall aufgrund einer Leckage in der hydraulischen Fahrzeugbremse. Mit dem Erreichen des Solldrucks p2 zum Zeitpunkt t3 fällt der hydraulische Bremsdruck p bereits während der Leerlaufphase zwischen t3 und t4 kontinuierlich ab. Mit dem Aufbau elektromechanischer Bremskraft zwischen den Zeitpunkten t4 und t5 reduziert sich das Bremsdruckniveau p weiter und fällt unter das Druckniveau p1 ab, das bei intaktem Bremssystem (Fig. 3) zum Zeitpunkt t5 erreicht wird. Auch aus diesem Druckabfall kann auf die Fehlerart geschlossen werden.

In Fig. 7 ist die Bremssituation mit ordnungsgemäß funktionierender hydraulischer Fahrzeugbremse, jedoch einem Fehler in der elektromechanischen Bremsvorrichtung dargestellt. Aufgrund dieses Fehlers wird der Bremskolben weniger weit verschoben als bei ordnungsgemäßer Funktion, so dass ein geringeres Zusatzvolumen für das Bremsfluid entsteht und entsprechend der Druckabfall im Verlauf des Bremsdrucks p geringer als bei ordnungsgemäßer Funktion gemäß Fig. 3 ausfällt. Der Druckabfall ist auch geringer als bei blockierter hydraulischer Bremsleitung gemäß Fig. 4, so dass ebenfalls auf die Fehlerart geschlossen werden kann.

## Patentansprüche

1. Verfahren zum Überprüfen der Bremskraft in einem Fahrzeug, bei dem eine hydraulische Fahrzeugbremse (1) mit Bremskraftverstärker (10) und eine elektromechanische Bremsvorrichtung mit einem elektrischen Bremsmotor (13) zur Erzeugung einer Bremskraft auf den gleichen Bremskolben (16) einer Radbremseinrichtung (9) wirken, wobei zum Aufbau einer Bremskraft zunächst der Bremskraftverstärker (10) einen definierten hydraulischen Bremsdruck in der hydraulischen Fahrzeugbremse (1) einstellt und anschließend durch Zuspannen durch den elektrischen Bremsmotor (13) eine elektromechanische Bremskraft erzeugt wird, **dadurch gekennzeichnet, dass** ein Fehlersignal erzeugt wird, falls ein sich einstellender Druckabfall im Bremsfluid außerhalb eines zulässigen Wertebereichs liegt.

2. Verfahren nach Anspruch 1, **dadurch gekennzeichnet, dass** während des Druckaufbaus des hydraulischen Bremsdrucks der elektrische Bremsmotor (13) bis zum Erreichen eines Bremskontaktpunktes betätigt wird, an dem ein vom Bremsmotor (13) beaufschlagter Bremskolben (16) ohne Lüftspiel an der Bremsscheibe (20) anliegt.

3. Verfahren nach Anspruch 1 oder 2, **dadurch gekennzeichnet, dass** nach dem Erreichen des definierten hydraulischen Bremsdrucks der Bremskraftverstärker (10) nicht weiter betätigt wird.

4. Verfahren nach einem der Ansprüche 1 bis 3, **dadurch gekennzeichnet, dass** der hydraulische Bremsdruck, der durch die Betätigung des Bremskraftverstärkers (10) erzeugt wird, höher ist als ein zum Erreichen der Zielbremskraft erforderlicher Bremsdruck.

5. Verfahren nach einem der Ansprüche 1 bis 4, **dadurch gekennzeichnet, dass** aus der Höhe des Druckabfalls auf den Fehlertyp geschlossen wird.

6. Verfahren nach Anspruch 5, **dadurch gekennzeichnet, dass** für den Fall, dass der Druckabfall unterhalb eines Schwellenwerts liegt, auf eine unzureichende elektromechanische Bremskraft geschlossen wird, andernfalls auf einen Fehler in der hydraulischen Fahrzeugbremse (1).

7. Verfahren nach einem der Ansprüche 1 bis 6, **gekennzeichnet durch** eine Durchführung des Verfahrens in Radbremseinrichtungen(9) an der Hinterachse des Fahrzeugs.

8. Verfahren nach einem der Ansprüche 1 bis 7, **gekennzeichnet durch** eine Durchführung des Verfahrens beim Erzeugen einer Parkbremskraft.

9. Regel- bzw. Steuergerät (11) zur Durchführung des Verfahrens nach einem der Ansprüche 1 bis 8.

10. Bremssystem in einem Fahrzeug, mit einer hydraulischen Fahrzeugbremse (1) und einer elektromechanischen Bremsvorrichtung mit einem elektrischen Bremsmotor (13) und mit einem Regel- bzw. Steuergerät (11) nach Anspruch 9 zur Ansteuerung der einstellbaren Komponenten des Bremssystems.

## Claims

1. Method for checking the braking force in a vehicle, in which a hydraulic vehicle brake (1), with a brake booster (10), and an electromechanical braking apparatus, with an electric brake motor (13) for generating a braking force, act on the same brake piston (16) of a wheel-brake device (9), wherein for the build-up of a braking force firstly the brake booster (10) sets a defined hydraulic brake pressure in the hydraulic vehicle brake (1) and subsequently an electromechanical braking force is generated by applying torque by means of the electric brake motor (13), **characterized in that** a fault signal is generated if a drop in pressure arising in the brake fluid lies outside a permissible range of values.

2. Method according to Claim 1, **characterized in that** during the build-up of the hydraulic brake pressure the electric brake motor (13) is actuated until a brake contact-point is reached, at which a brake piston (16) acted upon by the brake motor (13) bears against the brake disk (20) without clearance.

3. Method according to Claim 1 or 2, **characterized in that** after the defined hydraulic brake pressure has been attained the brake booster (10) is not actuated further.

4. Method according to one of Claims 1 to 3, **characterized in that** the hydraulic brake pressure that is generated by the actuation of the brake booster (10) is higher than a brake pressure required for attaining the target braking force.

5. Method according to one of Claims 1 to 4, **characterized in that** the type of fault is inferred from the extent of the drop in pressure.

6. Method according to Claim 5, **characterized in that** in the case where the drop in pressure lies below a threshold value an insufficient electromechanical braking force is inferred; otherwise a fault in the hydraulic vehicle brake (1) is inferred.

7. Method according to one of Claims 1 to 6, **characterized by** an implementation of the method in wheel-brake devices (9) on the rear axle of the vehicle.

8. Method according to one of Claims 1 to 7, **characterized by** an implementation of the method in the course of generating a parking-brake force.

9. Closed-loop or open-loop control unit (11) for implementing the method according to one of Claims 1 to 8.

10. Braking system in a vehicle, with a hydraulic vehicle brake (1) and an electromechanical braking apparatus with an electric brake motor (13) and with a closed-loop or open-loop control unit (11) according to Claim 9 for triggering the adjustable components of the braking system.

## Revendications

1. Procédé de vérification de la force de freinage dans un véhicule, où un frein de véhicule hydraulique (1) doté d'un servofrein (10) et un dispositif de freinage électromécanique doté d'un moteur-frein électrique (13) opèrent pour produire une force de freinage sur les mêmes pistons de frein (16) d'un équipement de freinage de roue (9), dans lequel le servofrein (10) règle d'abord une pression de freinage dans le frein de véhicule hydraulique (1) et une force de freinage électromécanique est ensuite produite par serrage au moyen du moteur-frein électrique (13) pour la montée en pression de freinage, **caractérisé en ce qu'**un signal de défaillance est produit au cas où une chute de pression survenant dans le liquide de frein se trouve en-dehors d'un intervalle de valeurs autorisées.

2. Procédé selon la revendication 1, **caractérisé en ce que** pendant la montée en pression de la pression de freinage hydraulique le moteur-frein électrique (13) est actionné jusqu'à atteindre un point de contact de freinage, auquel un piston de freinage (16) sollicité par le moteur-frein (13) appuie sans jeu sur le disque de frein (20).

3. Procédé selon la revendication 1 ou 2, **caractérisé en ce qu'**après avoir atteint la pression de freinage hydraulique définie, le servofrein (10) n'est plus actionné.

4. Procédé selon l'une des revendications 1 à 3, **caractérisé en ce que** la pression de freinage hydraulique produite par l'actionnement du servofrein (10) est supérieure à une pression de freinage nécessaire pour atteindre la force de freinage visée.

5. Procédé selon l'une des revendications 1 à 4, **caractérisé en ce que** le type de défaillance est conclu à partir du niveau de la chute de pression.

6. Procédé selon la revendication 5, **caractérisé en ce que** pour le cas où la chute de pression se trouve en dessous d'une valeur seuil, on en déduit une force de freinage électromécanique insuffisante, et autrement on en déduit une défaillance dans le frein hydraulique de véhicule (1).

7. Procédé selon l'une des revendications 1 à 6, **caractérisé par** une mise en œuvre du procédé dans des équipements de freinage de roue (9) sur l'essieu arrière du véhicule.

8. Procédé selon l'une des revendications 1 à 7, **caractérisé par** une mise en œuvre du procédé pour obtenir une force de freinage de stationnement.

9. Appareil de commande ou de contrôle (11) destiné à effectuer un procédé selon l'une des revendications 1 à 8.

10. Système de frein dans un véhicule, doté d'un frein de véhicule hydraulique (1) et d'un dispositif de freinage électromécanique doté d'un moteur-frein électrique (13) et d'un appareil de régulation ou de commande (11) selon la revendication 9 pour commander les composants réglables du système de frein.
